# EUROPEAN PATENT SPECIFICATION

(11) **EP 3 315 503 B1**
(45) Date of publication and mention of the grant of the patent: **04.12.2019**
(21) Application number: 17198731.6
(22) Date of filing: 27.10.2017
(51) Int. Cl.: C07F 7/10

(54) **METHOD FOR PRODUCING SILANE COMPOUND INCLUDING BIS(SILYL)AMINO GROUP**
VERFAHREN ZUR HERSTELLUNG EINER SILANVERBINDUNG MIT BIS(SILYL)-AMINOGRUPPE
PROCÉDÉ DE PRODUCTION DE COMPOSÉ SILANE COMPRENANT UN GROUPE AMINO BIS(SILYL)

(30) Priority: 28.10.2016 JP 2016211884
(43) Date of publication of application: 02.05.2018
(73) Proprietor: Shin-Etsu Chemical Co., Ltd., Tokyo (JP)
(72) Inventor: TONOMURA, Yoichi, Joetsu-shi, Niigata (JP); KUBOTA, Tohru, Joetsu-shi, Niigata (JP)
(74) Representative: Ter Meer Steinmeister & Partner

(56) References cited:
- EP-A1- 1 481 980
- JP-A- 2005 112 820

## Description

### TECHNICAL FIELD

The present invention relates to a method for producing silane compound including a bis(silyl)amino group, further particularly to a method for producing silane compound including a bis(silyl)amino group which is an advantage as a silane coupling agent, a surface treatment agent, a resin additive agent, a coating additive agent, and an adhesive agent.

### BACKGROUND ART

Silane compound including a bis(silyl)amino group is advantage as a silane coupling agent, a surface treatment agent, a resin additive agent, a coating additive agent, and an adhesive agent.

As for the method for producing this silane compound including a bis(silyl)amino group, a method is known to react unsaturated bond containing compound including a bis(silyl)amino group and hydrogensilane compound in presence of platinum compound catalyst (see Patent Document 1: JP-A H10-17578 and Patent Document 2: JP-A H10-17579).

In addition, a method for producing unsaturated bond containing compound including a bis(silyl)amino group which is raw material for this reaction is known to be a method for silanization of unsaturated bond containing compound including an amino group, such as allylamine, by silylating agent, and a method for disproportionation of unsaturated bond containing compound including a monosilyl amino group in presence of acid catalyst, such as sulfonic acid (see Patent Document 1 to Patent Document 3: JP-A H10-218883). The preparation of bis(trimethylsilyl)aminopropyl substituted chlorosilanes is disclosed in Patent Document 4: JP 2005 112820 A and Patent Document 5: EP 1 481 980 A1.

### Citation List

Patent Document 1: JP-A H10-17578
Patent Document 2: JP-AH10-17579
Patent Document 3: JP-A H10-218883

### SUMMARY OF THE INVENTION

However, the methods of Patent Document 1 and Patent Document 2 may stop the reaction in the middle depending on the used raw material so as to have a low yield. Thus, it was difficult to implement a stable production.

In addition, when silane compound including a bis(silyl)amino group was produced from raw material of unsaturated bond containing compound including a bis(silyl)amino group obtained by the method of Patent Document 3, it sometimes happens to stop the reaction in the middle depending on the raw material so as to lead the low yield.

The present invention has an object of providing a method for efficiently and stably producing silane compound including a bis(silyl)amino group with good yield.

The inventors carried out earnest investigation in order to accomplish the above-described object. As the result, the inventors found that both of a method for performing silanization with silylating agent on unsaturated bond containing compound including an amino group, such as allylamine, and a method for performing disproportionation on unsaturated bond containing compound including a monosilyl amino group in presence of acid catalyst, such as sulfonic acid, obtain unsaturated bond containing compound including a bis(silyl)amino group in which unsaturated bond containing compound including a monosilyl amino group is contained, that the compound, while the amino group is protected by the silyl group, works as a reaction block substance for the reaction of unsaturated bond containing compound including a bis(silyl)amino group and hydrogensilane compound with platinum catalyst, and that using unsaturated bond containing compound including a bis(silyl)amino group, in which small amount of this reaction block substance is contained, improves reactivity to stably produce silane compound, in which the amino group protected by the silyl group is contained, so as to complete the present invention.

Specifically, the present invention is
1. A method for producing silane compound including a bis(silyl)amino group of a general formula (3) described below, the method comprising the reaction of an unsaturated bond containing compound including a bis(silyl)amino group of a general formula (1) described below with a hydrogensilane compound of a general formula (2) described below react in the presence of a platinum compound, wherein the unsaturated bond containing compound including the bis(silyl)amino group of the general formula (1) to be used has a content of up to 5.0% by weight of a compound of general formula (4) described below: 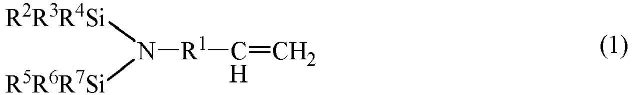 (wherein R¹ is a divalent hydrocarbon group having 1 to 18 carbon atoms which may include a hetero atom, R² to R⁷ individually are a substituted or unsubstituted monovalent hydrocarbon group having 1 to 20 carbon atoms, and R² and R⁵ may bond with each other to form a ring including 2 to 20 carbon atoms with a silicon atom to which they are bonded);

   HSiR⁸ₙX₃₋ₙ (2)

   [wherein R⁸ is a substituted or unsubstituted monovalent hydrocarbon group having 1 to 20 carbon atoms, letter X is a halogen atom or -OR⁹ (R⁹ is a substituted or unsubstituted monovalent hydrocarbon group having 1 to 20 carbon atoms) and letter n is an integer of 0 to 2]; 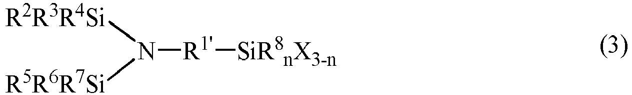 (wherein R^{1'} is a divalent hydrocarbon group having 3 to 20 carbon atoms which may include a hetero atom, and R² to R⁸, letters X and n are the same meaning as described above); and 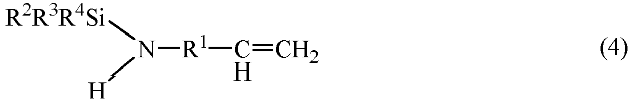 (wherein R¹ to R⁴ are the same meaning as described above);

### ADVANTAGEOUS EFFECT OF THE INVENTION

In accordance with the present invention, it is possible to efficiently and stably produce silane compound including a bis(silyl)amino group with good yield which is useful as silane coupling agent, surface treatment agent, resin additive agent, coating additive agent, and adhesive agent.

### DESCRIPTION OF THE PREFERRED EMBODIMENTS

In the following description, the present invention will be particularly described in detail.

A method for producing silane compound including a bis(silyl)amino group according to the present invention is a method for producing silane compound including a bis(silyl)amino group of a general formula (3) described below, the method comprising the reaction of an unsaturated bond containing compound including a bis(silyl)amino group of a general formula (1) described below with a hydrogensilane compound of a general formula (2) described below subject to hydrosilylation reaction in presence of platinum compound, wherein the unsaturated bond containing compound including a bis(silyl)amino group of the general formula (1) to be used has a content of up to 5.0 % by weight which becomes a reaction block substance of the above described hydrosilylation reaction and which is a compound of general formula (4) described below:

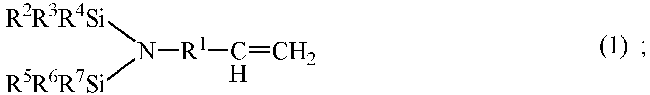

HSiR⁸ₙX₃₋ₙ (2) ;

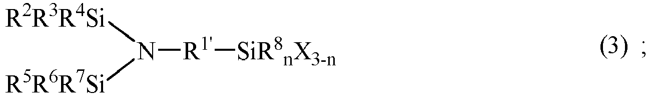

and

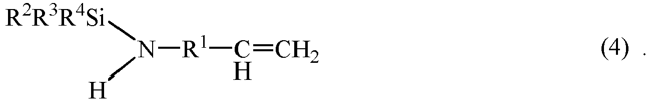

Here, R¹ in the above described general formula (1) is a divalent hydrocarbon group, which may include a hetero atom, having 1 to 18 carbon atoms, preferably 1 to 10 carbon atoms, more preferably 1 to 6 carbon atoms. Specific example may be an alkylene group, such as a methylene group, an ethylene group, a propylene (methylethylene) group, a trimethylene group, a methyltrimethylene group, a tetramethylene group, a hexamethylene group, an octamethylene group, a decamethylene group, and an isobutylene group; an arylene group, such as a phenylene group, and a methylphenylene group; an aralkylene group, such as an ethylenephenylene group, and an ethylenephenylene methylene group; a hetero atom containing alkylene group, such as a 3-oxabutylene group, a 3-azabutylene group, a 3-oxahexylene group, and a 3-azahexylene group.

R² to R⁷ individually are a substituted or unsubstituted monovalent hydrocarbon group having 1 to 20 carbon atoms, preferably 1 to 10 carbon atoms, more preferably 1 to 6 carbon atoms. For example, they may be a straight-chain, branched-chain or cyclic alkyl group, an alkenyl group, an aryl group, and an aralkyl group.

Their specific examples include a straight-chain alkyl group, such as a methyl group, an ethyl group, an n-propyl group, an n-butyl group, an n-pentyl group, an n-hexyl group, an n-heptyl group, an n-octyl group, a decyl group, a dodecyl group, a tetradecyl group, a hexadecyl group, a octadecyl group, and an icosyl group; a branched-chain alkyl group, such as an isopropyl group, an isobutyl group, a sec-butyl group, a tert-butyl group, a thexyl group, and a 2-ethylhexyl group; a cyclic alkyl group, such as a cyclopentyl group, and a cyclohexyl group; an alkenyl group, such as a vinyl group, an allyl group, and a propenyl group; an aryl group, such as a phenyl group, and a tolyl group; an aralkyl group, such as a benzyl group. Among them, methyl, ethyl, isopropyl, sec-butyl, and tert-butyl groups are preferable.

In addition, R² and R⁵ may bond with each other to form a ring having 2 to 20 carbon atoms with a silicon atom to which they are bonded.

It is noted that hydrogen atoms included in each of the above described hydrocarbon groups may be partially or totally substituted by a substituted group. Specific examples of this substituted group include an alkoxy group having 1 to 5 carbon atoms, such as a methoxy group, an ethoxy group, and an (iso) propoxy group; a halogen atom, such as a fluorine atom, a chlorine atom, a bromine atom, and an iodine atom; a cyano group; an amino group; an acyl group having 2 to 10 carbon atoms; a trichlorosilyl group; a trialkyl silyl group, a dialkyl monochlorosilyl group, a mono alkyldichlorosilyl group, a trialkoxysilyl group, a dialkyl mono alkoxysilyl group or a mono alkyldialkoxysilyl group, in which each alkyl group and each alkoxy group have 1 to 5 carbon atoms.

Specific examples of the unsaturated bond containing compound including a bis(silyl)amino group of the above described general formula (1) include N,N-bis(trimethylsilyl)allylamine, N,N-bis(trimethylsilyl)methallylamine, N,N-bis(trimethylsilyl)butenylamine, N,N-bis(trimethylsilyl)hexenylamine, N,N-bis(trimethylsilyl)decenylamine, N,N-bis(trimethylsilyl)vinylaniline, N,N-bis(triethylsilyl)allylamine, N,N-bis(triethylsilyl)methallylamine, N,N-bis(triethylsilyl)butenylamine, N,N-bis(triethylsilyl)hexenylamine, N,N-bis(triethylsilyl)decenylamine, N,N-bis(triethylsilyl)vinylaniline, N,N-bis(t-butyldimethylsilyl)allylamine, N,N-bis(t-butyldimethylsilyl)methallylamine, N,N-bis(t-butyldimethylsilyl)butenylamine, N,N-bis(t-butyldimethylsilyl)hexenylamine, N,N-bis(t-butyldimethylsilyl)decenylamine, N,N-bis(t-butyldimethylsilyl)vinylaniline, N,N-bis(triisopropylsilyl)allylamine, N,N-bis(triisopropylsilyl)methallylamine, N,N-bis(triisopropylsilyl)butenylamine, N,N-bis(triisopropylsilyl)hexenylamine, N,N-bis(triisopropylsilyl)decenylamine, N,N-bis(triisopropylsilyl)vinylaniline, N-triethylsilyl-N-trimethylsilylallylamine, N-triethylsilyl-N-trimethylsilylmethallylamine, N-triethylsilyl-N-trimethylsilylbutenylamine, N-triethylsilyl-N-trimethylsilylhexenylamine, N-triethylsilyl-N-trimethylsilyldecenylamine, N-triethylsilyl-N-trimethylsilylvinylaniline, N-t-butyldimethylsilyl-N-trimethylsilylallylamine, N-t-butyldimethylsilyl-N-trimethylsilylmethallylamine, N-t-butyldimethylsilyl-N-trimethylsilylbutenylamine, N-t-butyldimethylsilyl-N-trimethylsilylhexenylamine, N-t-butyldimethylsilyl-N-trimethylsilyldecenylamine, N-t-butyldimethylsilyl-N-trimethylsilylvinylaniline, N-triisopropylsilyl-N-trimethylsilylallylamine, N-triisopropylsilyl-N-trimethylsilylmethallylamine, N-triisopropylsilyl-N-trimethylsilylbutenylamine, N-triisopropylsilyl-N-trimethylsilylhexenylamine, N-triisopropylsilyl-N-trimethylsilyldecenylamine, and N-triisopropylsilyl-N-trimethylsilylvinylaniline.

It is noted that the unsaturated bond containing compound including a bis(silyl)amino group of the above described general formula (1) is obtained, for example, by performing silanization on the compound of the general formula (4) described above or on the compound of the general formula (5) described above, or by performing disproportionation reaction on the compound of the general formula (4) described above in presence of sulfur-containing acid compound. 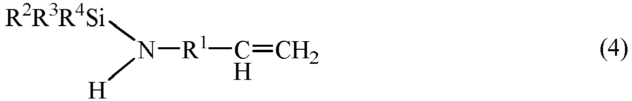 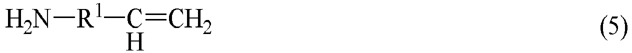 (wherein R¹ to R⁴ are the same meaning as described above.)

Normally, in the unsaturated bond containing compound including a bis(silyl)amino group of obtained by these reaction the above described general formula (1), the compound of the above described general formula (4) is contained. Here, it is generally known that the amino group reduces the catalytic activity of the platinum compound by its own unshared electron pair and that, when the amino group is protected by the silyl group, the steric hindrance of the silyl group suppresses the catalyst reduction of the unshared electron pair. However, it is found that the compound of the above described general formula (4), in which the amino group is protected by the silyl group, reduces the catalytic activity of the platinum compound used for the hydrosilylation reaction of the present invention and works as a reaction block substance against the hydrosilylation reaction.

In the present invention, the content of the compound of the general formula (4), which is included in the compound of the general formula (1), is used as the raw material, and works as the reaction blocker, is reduced, to promote the above described hydrosilylation reaction, so as to efficiently and stably obtain the silane compound including a bis(silyl)amino group of the above described general formula (3) in high yield.

As described above, in the present invention, the content of the compound of the above described general formula (4) in the unsaturated bond containing compound including a bis(silyl)amino group of the general formula (1) is up to 5.0 % by weight. However, if promoting the hydrosilylation reaction and then stably obtaining the object with good yield are considered, the content of the compound is preferred to be up to 2.0 % by weight, and particularly to be up to 1.0 % by weight.

The compound of the above described general formula (4) contained in the unsaturated bond containing compound including a bis(silyl)amino group of the general formula (1) can be reduced by well known purification methods, such as separation by rectification, a column chromatography, and absorbing agent of activated carbon.

R⁸ and R⁹ in the above described general formula (2) are a substituted or unsubstituted monovalent hydrocarbon group having 1 to 20 carbon atoms. The specific example of them is similar to the substituted group exemplary depicted for the above described R² to R⁷.

The specific examples of the halogen atom of X may include a fluorine atom, a chlorine atom, a bromine atom, and an iodine atom.

Letter n is an integer of 0 to 2.

The specific examples of the hydrogensilane compound of the above described general formula (2) may include trichlorosilane, methyldichlorosilane, dimethylchlorosilane, tribromosilane, methyldibromosilane, dimethylbromosilane, ethyldichlorosilane, diethylchlorosilane, trimethoxysilane, methyldimethoxysilane, dimethylmethoxysilane, triethoxysilane, methyldiethoxysilane, and dimethylethoxysilane.

R^{1'} in the above described general formula (3) is a divalent hydrocarbon group having 3 to 20 carbon atoms which may include a hetero atom. The specific example of this may be a divalent hydrocarbon group having at least 3 carbon atoms among the divalent hydrocarbon groups exemplary depicted with respect to the above described R¹.

Reaction ratio of the unsaturated bond containing compound including a bis(silyl)amino group of the above described general formula (1) and the hydrogensilane compound of the above described general formula (2) is not limited. However, in view of reactivity and productivity, the range of 0.5 to 3.0 mol of the compound of the general formula (2) relative to 1 mol of the compound of the general formula (1) is preferable, and the range of 0.8 to 1.5 mol is more preferable.

In addition, the specific examples of the platinum compound used as the catalyst of the above described reaction may include platinum chloride, alcohol solution of platinum chloride, toluene or xylene solution of platinum-1,3-divinyl-1,1,3,3-tetramethyldisiloxane complex, tetrakistriphenylphosphineplatinum, dichlorobistriphenylphosphineplatinum, dichlorobisacetonitrileplatinum, dichlorobisbenzonitrileplatinum, dichlorocyclooctadieneplatinum, and platinum-activated carbon.

Use amount of the platinum compound is not particularly limited. However, in view of reactivity and productivity, 0.000001 to 0.2 mol is preferable and 0.00001 to 0.1 mol is more preferable, with respect to 1 mol of the unsaturated bond containing compound including a bis(silyl)amino group of the above described general formula (1).

It is noted that, solvent can be used although the above described reaction can be preceded without solvent.

Specific examples of the solvent to be used may include hydrocarbon-based solvent, such as pentane, hexane, cyclohexane, heptane, isooctane, benzene, toluene, and xylene; ether-based solvent, such as diethylether, tetrahydrofuran, and dioxane; ester-based solvent, such as ethyl acetate, and butyl acetate; aprotic polar solvent, such as acetonitrile, N,N-dimethylformamide, and N-methylpyrrolidone; hydrocarbon chloride-based solvent, such as dichloromethane, and chloroform. As for these solvent, one type of solvent might be independently used or at least two types of solvent are mixed to be used.

Although reaction temperature is not particularly limited, 0°C to 200°C is preferable and 20°C to 150°C is more preferable. Although reaction time is not particularly limited either, one to 60 hours are preferable and one to 30 hours are more preferable.

It is preferable that reaction atmosphere is inactive gas atmosphere, such as nitrogen, and argon.

From the reaction solution after the end of reaction, the object can be collected by a normal method, such as distillation.

### EXAMPLES

In the following description, the present invention would be described in detail with Synthesis Examples, Examples, and Comparative Examples. However, the present invention is not limited to the Examples described below.

### Synthesis Example 1

In a flask including an agitator, a fraction extracting apparatus, and a thermometer, 387.9 g (3.0 mol) ofN-trimethylsilylallylamine and 10.5 g (0.03 mol) of dodecylbenzenesulfonic acid were prepared and heated so as to be refluxed, and then to extract allylamine generated in eight hours. Obtained reaction solution was subjected to simple distillation so as to obtain 265.8 g of N,N-bis(trimethylsilyl)allylamine as a fraction whose boiling point was 85°C to 87°C/5 kPa. Gas chromatography measurement was performed so as to confirm that obtained N,N-bis(trimethylsilyl)allylamine includes 10 % by weight of N-trimethylsilylallylamine as raw material. N,N-bis(trimethylsilyl)allylamine obtained as described above was used in the Comparative Examples 1 to 3.

### Synthesis Example 2

In the above described Synthesis Example 1, N,N-bis(trimethylsilyl)allylamine was obtained, and 200.0 g of it was rectified with a distillation column whose height was 500 mm. By the rectification, 175.5 g of a fraction whose boiling point was 86°C to 87°C/5 kPa was obtained. The content of N-trimethylsilylallylamine in this fraction was 7.0 % by weight, and the reduction of the content of N-trimethylsilylallylamine was confirmed. N,N-bis(trimethylsilyl)allylamine obtained as described above, was used in the Comparative Example 4.

### Synthesis Example 3

In the above described Synthesis Example 1, N,N-bis(trimethylsilyl)allylamine was obtained, and 200.0 g of it was rectified with a distillation column whose height was 500 mm. By the rectification, 153.5 g of a fraction whose boiling point was 87°C/5 kPa was obtained. The content of N-trimethylsilylallylamine in this fraction was 1.0 % by weight, and the reduction of the content of N-trimethylsilylallylamine was confirmed. N,N-bis(trimethylsilyl)allylamine obtained as described above, was used in the Examples 1 to 3.

### Synthesis Example 4

In the above described Synthesis Example 1, N,N-bis(trimethylsilyl)allylamine was obtained, and 200.0 g of it was rectified with a distillation column whose height was 500 mm. By the rectification, 145.2 g of a fraction whose boiling point was 87°C/5 kPa was obtained. The content of N-trimethylsilylallylamine in this fraction was 0.5 % by weight, and the reduction of the content of N-trimethylsilylallylamine was confirmed. N,N-bis(trimethylsilyl)allylamine obtained as described above, was used in the Example 4.

### Example 1

In a flask including an agitator, a reflux device, a drop funnel, and a thermometer, 60.5 g (0.3 mol) of N,N-bis(trimethylsilyl)allylamine (1.0 % by weight of N-trimethylsilylallylamine was contained) produced by the Synthesis Example 3 and 0.20 g of 3 % by weight toluene solution of platinum-1,3-divinyl-1,1,3,3-tetramethyldisiloxane complex were prepared and then heated to 50°C. After the internal temperature became stable, 49.3 g (0.3 mol) of triethoxysilane was dropped for two hours and then agitation was performed at the temperature for two hours. The weight ratio of N,N-bis(trimethylsilyl)aminopropyltriethoxysilane, which is the object at this time point, and N,N-bis(trimethylsilyl)allylamine, which is raw material, obtained by gas chromatography analysis was 99.0:1.0.

### Example 2

In a flask including an agitator, a reflux device, a drop funnel, and a thermometer, 60.5 g (0.3 mol) of N,N-bis(trimethylsilyl)allylamine (1.0 % by weight of N-trimethylsilylallylamine was contained) produced by the Synthesis Example 3 and 0.20 g of 3 % by weight toluene solution of platinum-1,3-divinyl-1,1,3,3-tetramethyldisiloxane complex were prepared and then heated to 50°C. After the internal temperature became stable, 36.7 g (0.3 mol) of trimethoxysilane was dropped for two hours and then agitation was performed at the temperature for two hours. The weight ratio of N,N-bis(trimethylsilyl)aminopropylmethoxysilane, which is the object at this time point, and N,N-bis(trimethylsilyl)allylamine, which is raw material, obtained by gas chromatography analysis was 97.1:2.9.

### Example 3

In a flask including an agitator, a reflux device, a drop funnel, and a thermometer, 60.5 g (0.3 mol) of N,N-bis(trimethylsilyl)allylamine (1.0 % by weight of N-trimethylsilylallylamine was contained) produced by the Synthesis Example 3 and 0.20 g of 3 % by weight toluene solution of platinum-1,3-divinyl-1,1,3,3-tetramethyldisiloxane complex were prepared and then heated to 50°C. After the internal temperature became stable, 40.3 g (0.3 mol) of methyldiethoxysilan was dropped for two hours and then agitation was performed at the temperature for two hours. The weight ratio of N,N-bis(trimethylsilyl)aminopropyltriethoxysilane, which is the object at this time point, and N,N-bis(trimethylsilyl)allylamine, which is raw material, obtained by gas chromatography analysis was 99.2:0.8.

### Example 4

In a flask including an agitator, a reflux device, a drop funnel, and a thermometer, 60.5 g (0.3 mol) of N,N-bis(trimethylsilyl)allylamine (0.5 % by weight of N-trimethylsilylallylamine was contained) produced by the Synthesis Example 4 and 0.20 g of 3 % by weight toluene solution of platinum-1,3-divinyl-1,1,3,3-tetramethyldisiloxane complex were prepared and then heated to 50°C. After the internal temperature became stable, 49.3 g (0.3 mol) of triethoxysilane was dropped for two hours and then agitation was performed at the temperature for two hours. The weight ratio of N,N-bis(trimethylsilyl)aminopropyltriethoxysilane, which is the object at this time point, and N,N-bis(trimethylsilyl)allylamine, which is raw material, obtained by gas chromatography analysis was 99.4:0.6.

### Comparative Example 1

Reaction was performed in a similar manner to that in the Example 1 except for using N,N-bis(trimethylsilyl)allylamine including 10 % by weight of N-trimethylsilylamine produced in the Synthesis Example 1. The weight ratio of N,N-bis(trimethylsilyl)aminopropyltriethoxysilane, which is the object at the time point when agitation was performed for two hours after the drop operation, and N,N-bis(trimethylsilyl)allylamine, which is raw material, obtained by gas chromatography analysis was 85.2:14.8.

### Comparative Example 2

Reaction was performed in a similar manner to that in the Example 2 except for using N,N-bis(trimethylsilyl)allylamine including 10 % by weight of N-trimethylsilylamine produced in the Synthesis Example 1. The weight ratio of N,N-bis(trimethylsilyl)aminopropyltrimethoxysilane, which is the object at the time point when agitation was performed for two hours after the drop operation, and N,N-bis(trimethylsilyl)allylamine, which is raw material, obtained by gas chromatography analysis was 80.4:19.6.

### Comparative Example 3

Reaction was performed in a similar manner to that in the Example 3 except for using N,N-bis(trimethylsilyl)allylamine including 10 % by weight of N-trimethylsilylamine produced in the Synthesis Example 1. The weight ratio of N,N-bis(trimethylsilyl)aminopropylmethyldiethoxysilane, which is the object at the time point when agitation was performed for two hours after the drop operation, and N,N-bis(trimethylsilyl)allylamine, which is raw material, obtained by gas chromatography analysis was 86.5:13.5.

### Comparative Example 4

Reaction was performed in a similar manner to that in the Example 1 except for using N,N-bis(trimethylsilyl)allylamine including 7.0 % by weight of N-trimethylsilylamine produced in the Synthesis Example 2. The weight ratio of N,N-bis(trimethylsilyl)aminopropyltriethoxysilane, which is the object at the time point when agitation was performed for two hours after the drop operation, and N,N-bis(trimethylsilyl)allylamine, which is raw material, obtained by gas chromatography analysis was 89.0:11.0.

As described above, in the Examples 1 to 4 in which N,N-bis(trimethylsilyl)allylamine was used as raw material, N,N-bis(trimethylsilyl)allylamine including up to 5.0 % by weight of N-trimethylsilylallylamine as compound of the general formula (4), the ratio of the object reached at least 97 % in two hours after the silane drop operation, whereas in the Comparative Examples 1 to 4 in which N,N-bis(trimethylsilyl)allylamine was used as raw material, N,N-bis(trimethylsilyl)allylamine including 10 % by weight or 7.0 % by weight of N-trimethylsilylallylamine, the ratio of the object was approximately 89 % at maximum two hours after silane drop operation. Thus, it is understood that the hydrosilylation reaction is promoted and the object can be efficiently obtained in high yield by reducing the content of the compound of the general formula (4) contained in the compound of the general formula (1) which is used as raw material to up to 5.0 % by weight.

It is noted that the yield of the object in each of the above described Comparative Examples reached almost a plateau in two hours of the reaction time, and that, even if the reaction time was set longer, the improvement of the yield was not observed.

## Claims

1. A method for producing a silane compound including a bis(silyl)amino group of a general formula (3) described below, the method comprising the reaction of an unsaturated bond containing compound including a bis(silyl)amino group of a general formula (1) described below with a hydrogensilane compound of a general formula (2) described below in the presence of a platinum compound,
wherein the unsaturated bond containing compound including the bis(silyl)amino group of the general formula (1) to be used has a content of up to 5.0 % by weight of a compound of general formula (4) described below: 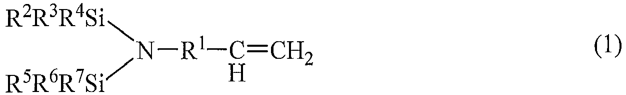 (wherein R¹ is a divalent hydrocarbon group having 1 to 18 carbon atoms which may include a hetero atom, R² to R⁷ individually are a substituted or unsubstituted monovalent hydrocarbon group having 1 to 20 carbon atoms, and R² and R⁵ may bond with each other to form a ring including 2 to 20 carbon atoms with a silicon atom to which they are bonded);
HSiR⁸ₙX₃₋ₙ (2)
[wherein R⁸ is a substituted or unsubstituted monovalent hydrocarbon group having 1 to 20 carbon atoms, letter X is a halogen atom or -OR⁹ (R⁹ is a substituted or unsubstituted monovalent hydrocarbon group having 1 to 20 carbon atoms) and letter n is an integer of 0 to 2]; 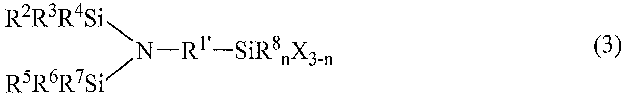 (wherein R^{1'} is a divalent hydrocarbon group having 3 to 20 carbon atoms which may include a hetero atom, and R² to R⁸, letters X and n are the same meaning as described above); and 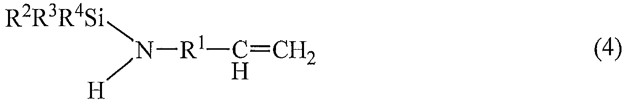 (wherein R¹ to R⁴ are the same meaning as described above).

## Patentansprüche

1. Verfahren zum Herstellen einer Silanverbindung, die eine Bis(silyl)aminogruppe einer unten beschriebenen allgemeinen Formel (3) einschließt, wobei das Verfahren die Reaktion einer Verbindung mit einer ungesättigten Bindung, die eine Bis(silyl)aminogruppe einer nachstehend beschriebenen allgemeinen Formel (1) einschließt, mit einer Hydrogensilanverbindung einer unten beschriebenen allgemeinen Formel (2) in Gegenwart einer Platinverbindung umfasst,
wobei die zu verwendende Verbindung mit der ungesättigten Bindung, die die Bis(silyl)aminogruppe der allgemeinen Formel (1) einschließt, einen Gehalt von bis zu 5,0 Gew.-% einer Verbindung der unten beschriebenen allgemeinen Formel (4) aufweist: 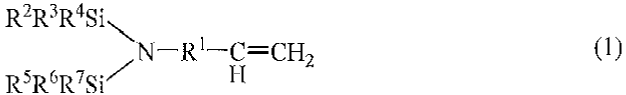 (wobei R¹ eine zweiwertige Kohlenwasserstoffgruppe mit 1 bis 18 Kohlenstoffatomen ist, die ein Heteroatom einschließen kann, R² bis R⁷ einzeln eine substituierte oder unsubstituierte einwertige Kohlenwasserstoffgruppe mit 1 bis 20 Kohlenstoffatomen sind und R² und R⁵ miteinander verbunden sein können, um einen Ring mit 2 bis 20 Kohlenstoffatomen mit einem Siliciumatom zu bilden, an das sie gebunden sind);
HSiR⁸ₙX₃₋ₙ (2)
[wobei R⁸ eine substituierte oder unsubstituierte einwertige Kohlenwasserstoffgruppe mit 1 bis 20 Kohlenstoffatomen ist, Buchstabe X ein Halogenatom oder -OR⁹ ist (R⁹ ist eine substituierte oder unsubstituierte einwertige Kohlenwasserstoffgruppe mit 1 bis 20 Kohlenstoffatomen) und Buchstabe n eine ganze Zahl von 0 bis 2 ist]; 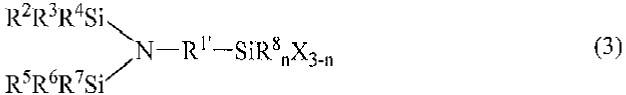 (wobei R^{1'} eine zweiwertige Kohlenwasserstoffgruppe mit 3 bis 20 Kohlenstoffatomen ist, die ein Heteroatom einschließen kann, und R² bis R⁸, die Buchstaben X und n die gleiche Bedeutung wie oben beschrieben haben); und 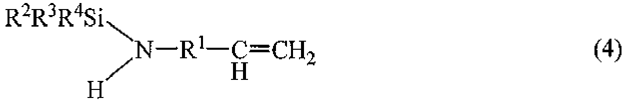 (wobei R¹ bis R⁴ die gleiche Bedeutung wie vorstehend beschrieben haben).

## Revendications

1. Procédé de production d'un composé silane comprenant un groupe bis(silyl)amino d'une formule générale (3) décrite ci-après, le procédé comprenant la réaction d'un composé à teneur en liaison insaturée comprenant un groupe bis(silyl)amino d'une formule générale (1) décrite ci-après avec un composé hydrogénosilane d'une formule générale (2) décrite ci-après en présence d'un composé du platine,
dans lequel le composé à teneur en liaison insaturée comprenant le groupe bis(silyl)amino de la formule générale (1) à utiliser a une teneur de jusqu'à 5,0 % en poids d'un composé de formule générale (4) décrite ci-après : 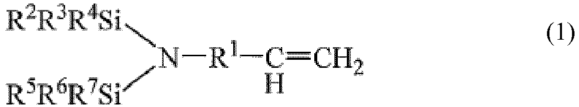 (dans laquelle R¹ est un groupe hydrocarboné divalent ayant 1 à 18 atomes de carbone qui peut comprendre un hétéro-atome, R² à R⁷ sont chacun un groupe hydrocarboné monovalent substitué ou non substitué ayant 1 à 20 atomes de carbone, et R² et R⁵ peuvent être liés l'un à l'autre pour former un cycle comprenant 2 à 20 atomes de carbone avec un atome de silicium auquel ils sont liés) ;
HSiR⁸ₙX₃₋ₙ (2)
[dans laquelle R⁸ est un groupe hydrocarboné monovalent substitué ou non substitué ayant 1 à 20 atomes de carbone, la lettre X désigne un atome d'halogène ou -OR⁹ (R⁹ est un groupe hydrocarboné monovalent substitué ou non substitué ayant 1 à 20 atomes de carbone) et la lettre n désigne un entier de 0 à 2] ; 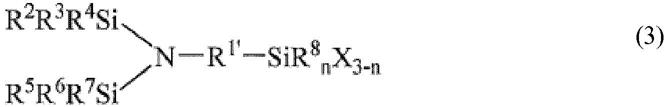 (dans laquelle R^{1'} est un groupe hydrocarboné divalent ayant de 3 à 20 atomes de carbone qui peut comprendre un hétéro-atome, et R² à R⁸, les lettres X et n ont la même signification que celle décrite ci-dessus) ; et 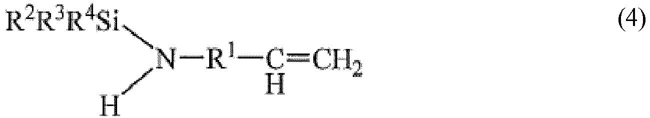 (dans laquelle R¹ à R⁴ ont la même signification que celle décrite ci-dessus).
